# EUROPÄISCHE PATENTSCHRIFT

(11) **EP 1 557 574 B1**
(45) Veröffentlichungstag und Bekanntmachung des Hinweises auf die Patenterteilung: **29.11.2006**
(21) Anmeldenummer: 05000367.2
(22) Anmeldetag: 11.01.2005
(51) Int. Cl.: F16B 19/10, F16B 19/00

(54) **Blindnietmutter**
Blind rivet nut
Ecrou à rivet aveugle

(30) Priorität: 21.01.2004 DE 102004003240
(43) Veröffentlichungstag der Anmeldung: 27.07.2005
(73) Patentinhaber: Newfrey LLC, Newark, Delaware 19711 (US)
(72) Erfinder: Schneider, Stefan, 35274 Kirchhain (DE)
(74) Vertreter: Haar, Lucas Heinz Jörn

(56) Entgegenhaltungen:
- EP-A- 0 589 144
- EP-A- 0 634 582
- DE-U1- 9 212 697
- GB-A- 2 310 904

## Beschreibung

Die Erfindung betrifft eine Blindnietmutter mit einem einen ringförmigen Flansch bildenden Kopf und einem Schaft, der ein Kopfende und ein Fußende und eine sich in Längsrichtung vom Kopfende zum Fußende erstreckende, zylindrische Bohrung aufweist, die am Fußende des Schaftes geschlossen ist und einen dem Fußende benachbarten, mit einem Innengewinde versehenen ersten Bohrungsabschnitt und einen dem Kopfende benachbarten, zweiten Bohrungsabschnitt hat, dessen Durchmesser größer ist als der Durchmesser des ersten Bohrungsabschnittes, wobei die den zweiten Bohrungsabschnitt umgebende Wand einen plastisch verformbaren Bereich des Schaftes bildet und eine als regelmäßiges polygonales, insbesondere sechskantiges Prisma gestaltete Außenfläche hat.

Blindnietmuttern werden vornehmlich in dünnwandige, insbesondere aus Blech hergestellte Bauteile eingesetzt, um diese mit einem Befestigungsgewinde zu versehen, das zur Befestigung eines Bolzens oder einer Schraube dienen kann. Blindnietmuttern können außerdem dazu dienen, zwei oder mehrere dünnwandige Bauteile miteinander zu verbinden. Blindnietmuttern können beispielsweise in das Blechdach von Automobilen eingesetzt werden, um daran einen Dachträger oder eine Dachreling befestigen zu können. Für derartige Anwendungen werden Blindnietmuttern mit geschlossenem Ende ausgeführt, damit ein dichter Verschluß des Daches nach dem Einsetzen der Blindnietmutter gegeben ist.

Blindnietmuttern der angegebenen Art sind aus EP 0 589 144 A1, EP 0 634 582 A1 und WO 02/081936 A1 bekannt.

Beim Befestigen von Blindnietmuttern der angegebenen Art besteht das Problem, daß die beim Verformen des verformbaren Bereichs Kräfte, die auf das die Blindnietmutter aufnehmende dünnwandige Bauteil oder Blech einwirken, das Bauteil bzw. Blech derart verformen können, daß eine gleichmäßige Anlage an dem Flansch der Blindnietmutter nicht mehr gewährleistet ist. Dies ist insbesondere von Nachteil, wenn eine dichte, den Durchtritt eines flüssigen oder gasförmigen Mediums verhindernde Verbindung zwischen der Blindnietmutter und dem dünnwandigen Bauteil bzw. Blech hergestellt werden soll. Ein weiteres Problem besteht bei der Befestigung von Blindnietmuttern darin, ein ausreichend große radiale Erstreckung des bei der Verformung des verformbaren Bereichs auf der Blindseite gebildeten polygonalen Wulstes zu erzielen.

Der Erfindung liegt die Aufgabe zugrunde, eine Blindnietmutter der eingangs genannten Art zu schaffen, die einfach und zuverlässig montierbar ist und eine gleichmäßige, zur Abdichtung geeignete Anlage des Flansches an dem die Mutter aufnehmenden Bauteil nach Beendigung des Verformungsvorgangs gewährleistet.

Die Aufgabe wird durch die in Patentanspruch 1 angegebene Erfindung gelöst. Vorteilhafte Ausgestaltungen der Erfindung sind in den Unteransprüchen angegeben.

Bei der erfindungsgemäßen Blindnietmutter beträgt die Wandstärke des verformbaren Bereichs an den dünnsten Stellen 4 bis 6 % des kleinsten Außendurchmessers des verformbaren Bereichs. Es hat sich gezeigt, daß bei einer solchen vergleichbar geringen Wandstärke die auftretenden Verformungskräfte selbst bei dünnwandigen Bauteilen, deren Wandstärke nur etwa dem doppelten der dünnsten Stellen des verformbaren Bereichs entspricht, nicht zu einer die gleichmäßige Anlage des Flansches beeinträchtigenden Verformung des Bauteils führt. Gleichwohl bildet der verformbare Bereich einen ausreichend stabilen, polygonalen Wulst von solcher radialen Ausdehnung, daß eine sichere Befestigung der Blindnietmutter und eine feste Auflage ihres Flansches gewährleistet ist.

Nach einem weiteren Vorschlag der Erfindung hat der Flansch der Blindnietmutter einen Durchmesser, der wenigstens dem Doppelten des kleinsten Außendurchmessers des verformbaren Bereichs entspricht. Hierdurch wird das die Blindnietmutter tragende Bauteil oder Blech in einem großen Bereich um die Befestigungsstelle an dem Flansch abgestützt und einer Verformung des Anlagebereichs entgegengewirkt. Zudem können auf die Blindnietmutter einwirkende Kippkräfte besser abgestützt werden, wodurch sich die Belastung im Bereich des Verformungswulstes reduziert.

Die Blindnietmutter kann nach einem weiteren Vorschlag der Erfindung durch Kaltformung im Fließpreßverfahren aus Stahl hergestellt sein. Dieses sehr kostengünstige Herstellverfahren hat an sich den Effekt, daß sich das Material durch die Umformung verfestigt, so daß das Setzen der Blindnietmutter höhere Verformungskräfte erfordert und zu einer stärkeren Belastung des dünnwandigen Bauteils oder Bleches führt. Hier stellt die erfindungsgemäße Messung der Wandstärke des verformbaren Bereiches einen günstigen Kompromiß dar, da durch die vergleichsweise geringe Wandstärke die Verformungskräfte klein gehalten werden, andererseits aber der Querschnitt des verformbaren Bereichs noch ausreichend groß bemessen ist, um die Blindnietmutter im Fließpreßverfahren herstellen zu können. Im Zusammenwirken dieser Maßnahmen wird somit eine Blindnietmutter geschaffen, die die Montage und Gebrauchsanforderungen erfüllt und zudem besonders kostengünstig herstellbar ist.

Die Erfindung wird nachfolgend anhand eines Ausführungsbeispiels näher erläutert, das in der Zeichnung dargestellt ist. Es zeigen
- Figur 1: eine Seitenansicht einer erfindungsgemäßen Nietmutter halbseitig geschnitten,
- Figur 2: eine Ansicht der Nietmutter gemäß Figur 1 von unten und
- Figur 3: eine Ansicht der Nietmutter gemäß Figur 1 im eingebauten Zustand.

Die in der Zeichnung dargestellte Blindnietmutter hat einen länglichen Schaft 1, der an einem Ende einen Flansch 2 trägt. Der Schaft 1 hat die Form eines regelmäßigen, sechskantigen Prismas und ist an seinem dem Flansch 2 entgegengesetzten Ende konisch zugespitzt. Durch die sechskantige Außenkontur wird beim Einsetzen des Schaftes in eine entsprechend geformte und in ihrer Größe dem Schaftquerschnitt angepaßte Bohrung ein Drehen des Schaftes in der Bohrung verhindert. Das zugespitzte Ende erleichtert das Einführen des Schaftes in die Bohrung erleichtert. Der Flansch 2 erstreckt sich rechtwinklig zur Längsachse des Schaftes 1 und hat die Form einer ebenen Kreisscheibe. Hiervon abweichend kann der Flansch auch eine polygonale, beispielsweise vier- oder sechseckige Form haben.

Durch den Flansch 2 und den größten Teil der Länge des Schaftes 1 erstreckt sich eine Bohrung 4, deren Längsachse mit der Längsachse des Schaftes 1 zusammenfällt. Die Bohrung 4 ist an dem Ende 3 des Schaftes 1 geschlossen. Sie weist einen dem Ende 3 benachbarten ersten Bohrungsabschnitt 5 auf, der mit einem Innengewinde zum Einschrauben eines Gewindebolzens oder einer Schraube versehen ist. An den Bohrungsabschnitt 5 schließt sich ein zweiter Bohrungsabschnitt 6 an, der sich bis zur Oberseite des Flansches 2 erstreckt. Der Bohrungsabschnitt 6 hat einen konstanten Durchmesser, der größer ist als der Gewindeaußendurchmesser des Innengewindes des ersten Bohrungsabschnittes 5. Die axiale Länge des zweiten Bohrungsabschnittes 6 entspricht im wesentlichen dem auch als Schlüsselweite bezeichneten kleinsten Außendurchmesser des Schaftes 1, kann aber auch größer sein, um beispielsweise die Montage in einem dickeren Bauteil oder das Verbinden mehrerer Bauteile miteinander zu ermöglichen.

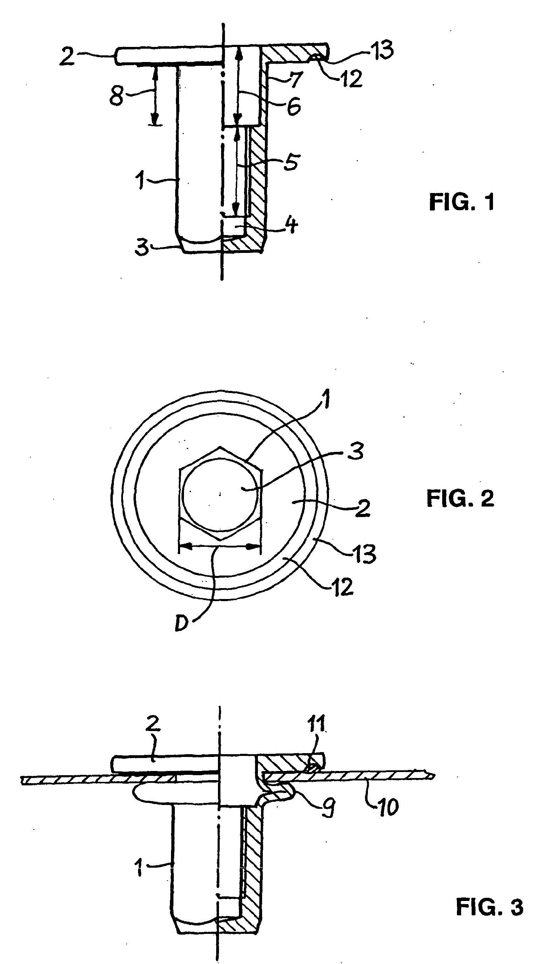

Die den zweiten Bohrungsabschnitt 6 umgebende Wand 7 des Schaftes 1 bildet einen verformbaren Bereich 8, der durch Einwirkung einer Axialkraft zu einem sich radial nach außen wölbenden Wulst 9 verformt werden kann, um, wie in Figur 3 gezeigt, die Blindnietmutter an einem Bauteil 10 zu befestigen. Der kleinste Außendurchmesser des Schaftes 1 und der Innendurchmesser des Bohrungsabschnitts 6 sind so aufeinander abgestimmt, daß die Wand 7 des verformbaren Bereiches 8 an den in der Mitte der Prismenflächen liegenden dünnsten Stellen eine Wandstärke von 4 % bis 6 %, vorzugsweise 4,5 % bis 5 % des kleinsten Außendurchmessers D des Schaftes 1 hat. Hierdurch wird insbesondere in Verbindung mit der Herstellung der Blindnietmutter als kaltgeformtes Fließpreßteil ein Verformungsverhalten des verformbaren Bereiches 8 erzielt, welches eine gleichmäßige Anlage des Flansches 2 an dem mit der Blindnietmutter verbundenen Bauteil 10 gewährleistet und eine zuverlässige Abdichtung des Flansches 2 gegenüber dem Bauteil 10 ermöglicht. Verformungen des Bauteils 10, die zu Verwerfungen und ungleichmäßiger Anlage des Flansches 2 führen könnten, werden vermieden. Durch das angegebene Verhältnis von Wandstärke zu Durchmesser wird außerdem erreicht, daß der gebildete Verformungswulst eine besonders große, radiale Abmessung erreicht, so daß eine stabile Verankerung der Blindnietmutter an dem Bauteil 10 erzielt werden kann.

Der Flansch 2 der Blindnietmutter hat einen Außendurchmesser, der wenigstens dem doppelten des Außendurchmessers der Wand 7 entspricht. Hierbei beiträgt die Dicke des Flansches 2 wenigstens dem vier- bis fünfachen der kleinsten Dicke der Wand 7. Die Umfangskontur des Flansches 2 wird beim Fließpressen der Blindnietmutter frei geformt.

In Figur 3 ist die Befestigung der Blindnietmutter an einem dünnwandigen Bauteil 10 aus Blech gezeigt. Zur Befestigung wird der Bohrungsabschnitt 5 der Blindnietmutter zunächst auf den Ziehdorn eines Setzwerkzeugs geschraubt und dann die Blindnietmutter mit ihrem Schaft 1 bis zur Auflage des Flansches 2 in eine sechseckige Öffnung im Bauteil 10 gesteckt. Anschließend wird der Bohrungsabschnitt 5 durch den Ziehdorn in Richtung des Flansches 2 bewegt, wobei sich das Setzwerkzeug an dem Flansch 2 abstützt. Durch diesen Vorgang wird der verformbare Bereich 8 zusammengedrückt, wobei er sich radial nach außen wölbt und einen Wulst 9 bildet, der sich auf der dem Flansch abgekehrten Seite fest an das Bauteil 10 anlegt und dadurch die Blindnietmutter im Bauteil 10 festhält.

Zur Abdichtung der Blindnietmutter gegenüber dem Bauteil 10 ist zwischen dem Flansch 2 und dem Bauteil 10 ein Dichtring 11 angeordnet. Der Dichtring 11 greift in eine Ringnut 12 des Flansches 2 ein und ist dadurch in einer konzentrischen Lage zur Blindnietmutter an dem Flansch 2 gehalten. Der radial äußere Rand 13 der Ringnut 12 ist etwas niedriger als die Dicke des Flansches 2, wodurch ein Ringspalt zwischen dem Rand 13 und dem Bauteil 10 gebildet wird, in den der Dichtring 11 eindringen kann, wenn er bei der Montage der Blindnietmutter zwischen dieser und dem Bauteil axial zusammengedrückt wird.

## Patentansprüche

1. Blindnietmutter mit einem einen ringförmigen Flansch (2) bildenden Kopf und einem Schaft (1), der ein Kopfende und ein Fußende und eine sich in Längsrichtung vom Kopfende zum Fußende erstreckende, zylindrische Bohrung (4) aufweist, die am Fußende des Schaftes geschlossen ist und einen den Fußende benachbarten, mit einem Innengewinde versehenen ersten Bohrungsabschnitt (5) und einen dem Kopfende benachbarten, zweiten Bohrungsabschnitt (6) hat, dessen Durchmesser größer ist als der Durchmesser des ersten Bohrungsabchnittes (5), wobei die den zweiten Bohrungsabschnitt (6) umgebende Wand (7) einen plastisch verformbaren Bereich (8) des Schaftes (1) bildet und eine als regelmäßiges polygonales, insbesondere sechskantiges Prisma gestaltete Außenfläche hat, **dadurch gekennzeichnet, daß** die Dicke der Wand (7) des verformbaren Bereichs (8) an den dünnsten Stellen 4 % bis 6 % des kleinsten Außendurchmessers des verformbaren Bereichs (8) beträgt.

2. Blindnietmutter nach Anspruch 1, **dadurch gekennzeichnet, daß** der Durchmesser des Flansches (2) wenigstens doppelt so groß ist wie der kleinste Außendurchmesser des verformbaren Bereiches (8).

3. Blindnietmutter nach einem der vorhergehenden Ansprüche, **dadurch gekennzeichnet, daß** die Dicke des Flansches (2) wenigstens das vier- bis fünffache der geringsten Dicke der Wand (7) beträgt.

4. Blindnietmutter nach einem der vorhergehenden Ansprüche, **dadurch gekennzeichnet, daß** der Flansch (2) eine Ringnut (12) zur Aufnahme eines Dichtrings (11) aufweist.

5. Blindnietmutter nach einem der vorhergehenden Ansprüche, **dadurch gekennzeichnet, daß** sie durch Kaltformung im Fließpreßverfahren aus Stahl hergestellt ist.

## Claims

1. Blind rivet nut having a head forming an annular flange (2) and a shank (1) comprising a head end and a foot end and a cylindrical bore (4) extending in lengthwise direction from the head end to the foot end, closed at the foot end of the shank and having a first bore segment (5) near the foot end, provided with an internal thread, and a second bore segment (6) near the head end whose diameter is greater than the diameter of the first bore segment (5), the wall (7) surrounding the second bore segment (6) forming a deformable region (8) of the shank (1) and having an outer surface in the form of a regular polygonal, in particular hexagonal prism, **characterized in that** the thickness of the wall (7) of the deformable region (8) in the thinnest places is 4% to 6% of the least outside diameter of the deformable region (8).

2. Blind rivet nut according to claim 1, **characterized in that** the diameter of the flange (2) is at least double the size of the least outside diameter of the deformable region (8).

3. Blind rivet nut according to either of the preceding claims, **characterized in that** the thickness of the flange (2) is at least four to five times the least thickness of the wall (7).

4. Blind rivet nut according to any of the preceding claims, **characterized in that** the flange (2) comprises an annular groove (12) to accommodate a sealing ring (11).

5. Blind rivet nut according to any of the preceding claims, **characterized by** being produced by cold forming using the flow pressure process.

## Revendications

1. Ecrou borgne à riveter comportant une tête formant un rebord annulaire (2) et une tige (1) qui comporte une extrémité de tête et une extrémité de pied et un perçage cylindrique (4) qui s'étend longitudinalement de l'extrémité de tête à l'extrémité de pied, qui est fermé à l'extrémité de pied de la tige et qui possède une première portion de perçage (5) adjacente à l'extrémité de pied et dotée d'un filetage intérieur et une deuxième portion de perçage (6), adjacente à l'extrémité de tête, dont le diamètre est supérieur au diamètre de la première portion de perçage (5), la paroi (7) qui entoure la deuxième portion de perçage (6) formant une région (8) déformable plastiquement de la tige (1) et présentant une surface extérieure en polygone régulier, notamment en prisme hexagonal, **caractérisé en ce que** l'épaisseur de la paroi (7) de la région déformable (8) est égale, aux endroits les plus minces, entre 4% et 6% du plus petit diamètre extérieur de la région déformable (8).

2. Ecrou borgne à riveter selon la revendication 1, **caractérisé en ce que** le diamètre du rebord (2) est au moins deux fois supérieur au plus petit diamètre extérieur de la région déformable (8).

3. Ecrou borgne à riveter selon l'une des revendications précédentes, **caractérisé en ce que** l'épaisseur du rebord (2) est égale entre quatre fois et cinq fois la plus faible épaisseur de la paroi (7).

4. Ecrou borgne à riveter selon l'une des revendications précédentes, **caractérisé en ce que** le rebord (2) comporte une gorge annulaire (12) destinée à recevoir une bague d'étanchéité (11).

5. Ecrou borgne à riveter selon l'une des revendications précédentes, **caractérisé en ce qu'**il est fabriqué en acier par un formage à froid dans le procédé de formage par fluage.
